# EUROPEAN PATENT SPECIFICATION

(11) **EP 1 444 127 B1**
(45) Date of publication and mention of the grant of the patent: **28.06.2006**
(21) Application number: 02788545.8
(22) Date of filing: 30.10.2002
(51) Int. Cl.: B62J 1/26

(54) **A PNEUMATIC SEAT, PARTICULARLY OF THE SADDLE TYPE**
PNEUMATISCHER SITZ/SATTEL
SIEGE PNEUMATIQUE, NOTAMMENT DU TYPE SELLE

(30) Priority: 06.11.2001 IT PD20010263
(43) Date of publication of application: 11.08.2004
(73) Proprietor: CRIVER TRADE S.R.L., 31057 Silea (IT)
(72) Inventor: SCALCO, Raffaello, I-31057 Silea (IT)
(74) Representative: Cantaluppi, Stefano
(86) International application number: PCT/IT2002/000693
(87) International publication number: WO 2003/039942

(56) References cited:
- EP-A- 0 903 321
- BE-A- 428 898
- DE-A- 4 004 311
- DE-C- 554 357
- DE-U- 9 004 906
- GB-A- 258 017
- GB-A- 298 998
- US-A- 4 611 851

## Description

### Technical field

The present invention relates to a pneumatic seat, particularly of the saddle type, according to the preamble to the main claim.

The invention is applicable mainly to the field of the manufacture of bicycle saddles and the like and, according to further applications, to the production of seats in general, for example, those used in the manufacture of chairs. In this field, the term "seat" is intended to include backrests and other parts which are normally padded, such as arms and the like.

These seats and saddles, an example of which is described in United States patent No. 4611851 in the name of H.B. Noyes, are generally constituted by a hollow inflatable shell, the stiffness of which depends on its inflation, that is, on the pressure inside the shell.

Saddles produced by this technique have the disadvantage of a high degree of deformability so that an increase in the pressure inside the shell, which is necessary to increase its stiffness, leads to a change in the shape of the shell walls. To prevent the saddle thus adopting a "rounded" shape which would adversely affect its functional capacity and comfort in use, the walls of the shell have to be quite thick and consequently only slightly deformable. As a result, the effect brought about by inflation is at most a pneumatic resilience

A saddle adapted to control deformation of its surfaces by means of cords extending between the opposite walls of an air cushion is known form GB258017. This type of saddles, however, if made of plastics material or in any case of materials with low air-permeability, do not ensure adequate comfort for the user since they do not allow the parts of the body which are in contact with the saddle to "breathe".

### Description of the invention

The main object of the present invention is to provide a pneumatic seat which is designed to overcome the limitations discussed with reference to the prior art mentioned.

Another object is to provide a pneumatic seat the load-bearing capacity of which is substantially independent of the thickness of the walls of the seat.

Another object is to provide a pneumatic seat at low cost.

Yet another object is to produce a seat of pleasing appearance which is also particularly light but strong and hence suitable for use as a saddle for racing cycles.

These objects and yet others which will become clearer from the following description are achieved by the invention by means of a pneumatic seat formed in accordance with the appended claims.

### Brief description of the drawings

The characteristics and the advantages of the invention will become clearer from the detailed description of some preferred embodiments thereof, illustrated by way of non-limiting example with reference to the appended drawings, in which:
Figure 1 is a perspective view of a pneumatic saddle according to the present invention, from above,
Figure 2 is a perspective view of the saddle of Figure 1 from below,
Figure 3 is a partially longitudinally sectioned side elevational view of the saddle of the preceding drawings,
Figure 4 is a partially-sectioned front elevational view of the saddle of the preceding drawings,
Figure 5 is a perspective view of a second embodiment of the saddle according to the invention, from above,
Figure 6 is a side elevational view of a third embodiment of the saddle according to the invention,
Figure 7 is a plan view of the saddle of Figure 6 from below, the upper half of the drawing showing the saddle in an assembled condition and the lower half showing the saddle in a disassembled condition,
Figure 8 is a plan view of a first detail of the saddle of Figure 6, disassembled from the saddle,
Figure 9 is a view of the detail of Figure 8 in section and in side elevation, fitted on the saddle of Figure 6,
Figures 10 and 11 are a side elevational view and a front elevational view, respectively, of a second detail of the saddle of Figure 6, disassembled therefrom,
Figure 12 is a sectioned and side elevational view of the detail of Figure 10, fitted on the saddle of Figure 6, and
Figure 13 is a sectioned and side elevational view of a third detail of the saddle of Figure 6, fitted thereon.

### Preferred embodiments of the invention

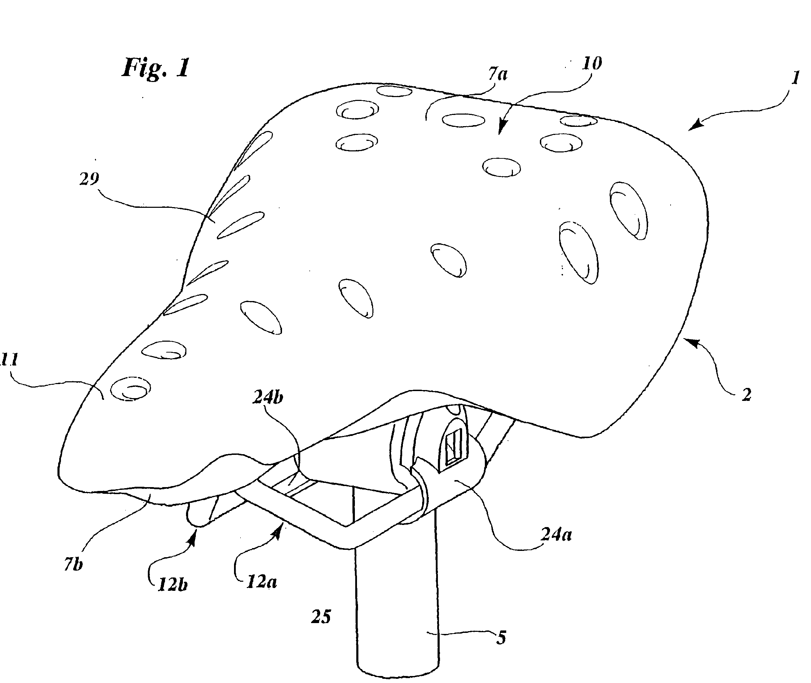

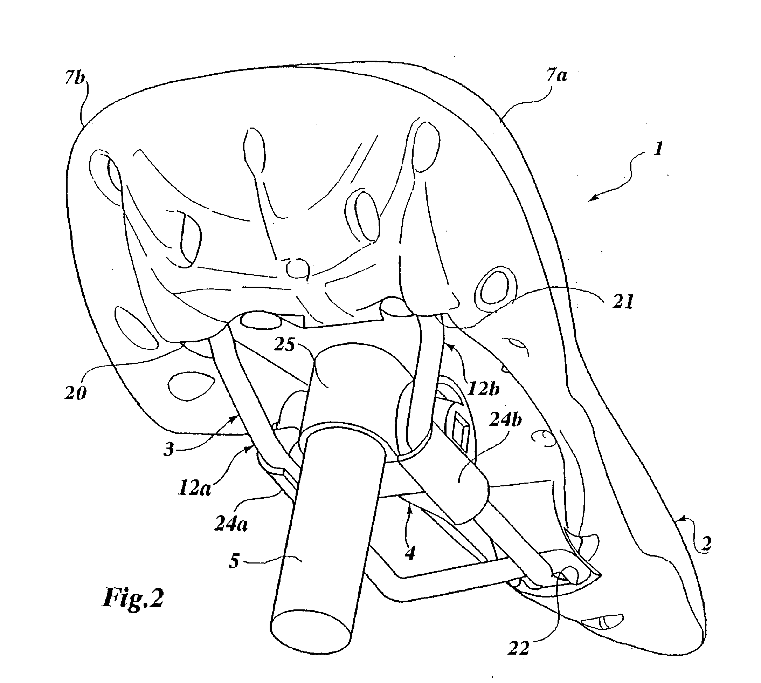

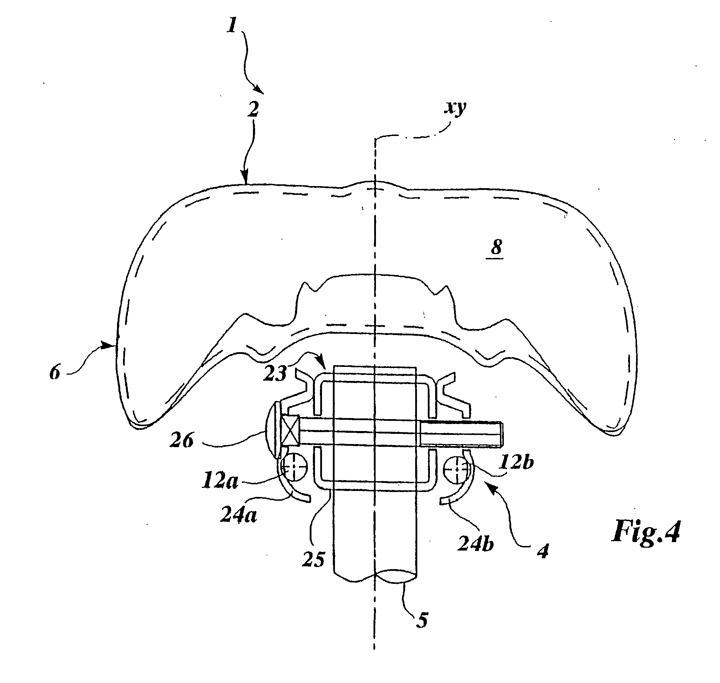

In Figures 1 to 4, a pneumatic saddle for transport means such as cycles and the like, formed in accordance with the present invention, is generally indicated 1. The term "cycles" is intended to include herein, in addition to conventional bicycles, also monocycles, and multicycles, as well as motor-assisted cycles and motorcycles.

The saddle 1 comprises a seat 2, a supporting framework 3, and a device 4 for attaching the supporting framework 3 to a tube 5 forming part of the frame (not shown) of the preselected cycle.

The seat 2 is produced in the form of a hollow shell 6 with upper and lower walls 7a and 7b spaced apart and suitably connected so as jointly to define an inflatable chamber 8. The pressure inside the inflatable chamber 8 can be adjusted by the blowing-in and expulsion of air through valve means 9 provided in the hollow shell 6.

The seat 2 is reflectively symmetrical with respect to a longitudinal median plane, indicated XY, and is tapered gradually along its length from a rear support region 10 towards a front region 11.

Moreover, the seat 2 is preferably produced by moulding of plastics material by known techniques such as centrifuging or blow-moulding. A plastics material which is transparent, for example, polyethylene-terephthalate (PET), or which is only partially transparent, is preferably used.

The thickness of the walls 7a, 7b of the hollow shell 6 which can be achieved by means of the above-mentioned techniques is quite small and preferably between 0.7 and 2 mm. According to a preferred selection, the thickness is about 0.8-1 mm and is substantially uniform and regular in every portion of the hollow shell 6.

The seat 2 may also be covered by a protective sheath, for example, of leather or similar material.

The supporting framework 3 comprises a pair of rod-like arms 12a, 12b which are reflectively symmetrical with respect to the plane XY and each of which is anchored, at its respective opposite ends 13, 14, to the lower wall 7b of the seat 2.

For this purpose, the lower wall 7b of the seat 2 has three pocket-like recesses 20, 21, 22 constituting seats for housing the ends 13, 14 of the rod-like arms 12a, 12b of the framework. The two recesses 20, 21 are positioned in the rear region 10 and house and restrain the respective ends 13 of each arm 12a, 12b, whereas the recess 22 is positioned in the front support region 11 and houses and restrains the ends 14 of both of the rod-like arms 12a, 12b.

In a variant, the two rod-like arms 12a, 12b may also be joined together or, more precisely, may be two arms of a single bent framework. In this case, the recess 22 houses the connecting portion of the two rod-like arms.

The attachment device 4 comprises a pair of jaws 24a, 24b mounted on a sleeve-like element 25 which can be fitted and clamped on the tube 5 of the cycle frame.

The jaws 24a, 24b are arranged on opposite sides of the sleeve 25 and are engaged slidably on respective intermediate portions of the rod-like arms 12a, 12b so that the position of the attachment device 4 relative to the framework 3 can be adjusted.

The two jaws 24a, 24b can be clamped onto the corresponding arms 12a, 12b by means of a screw 26 the tightening of which also clamps the sleeve 25 onto the tube 5 so as to form a firm coupling between the saddle 1 and the frame of the preselected cycle.

Moreover, the jaws 24a, 24b are coupled with the sleeve so as to be rotatable about the axis of the screw 26 to permit a large degree of adjustment of the position and orientation of the seat 2 of the saddle 1 relative to the frame.

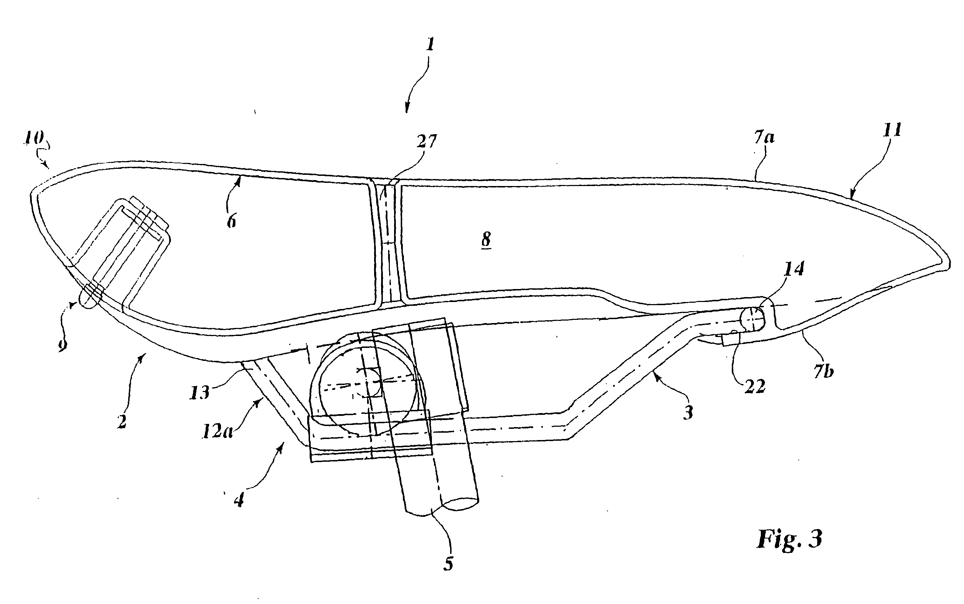

According to the invention, the saddle 1 comprises at least one tie and preferably a plurality of ties, all indicated 27, which extend between the lower wall 7b and the upper wall 7a of the seat 2 and only one of which is shown in Figure 3. The ties 27 are preferably formed during the moulding of the saddle 1 so as to constitute bridge elements extending between and integral with the upper and lower walls 7a, 7b. The ties are arranged reflectively symmetrically with respect to the plane XY and also preferably extend along axes substantially parallel to that plane. Moreover, the number and size of the ties 27 are selected in a manner such that the deformability of the saddle 1 with variations in the pressure inside the inflatable chamber 8 is reduced as much as possible and, at the same time, a firm load-bearing structure is produced. In particular, the ties 27 are located mostly in the peripheral region of the seat 2 and in the rear support region 10.

The ties 27 are hollow axially so as to constitute a type of ducting extending between the opposed walls 7a, 7b, and to act as ventilation ducts between the walls.

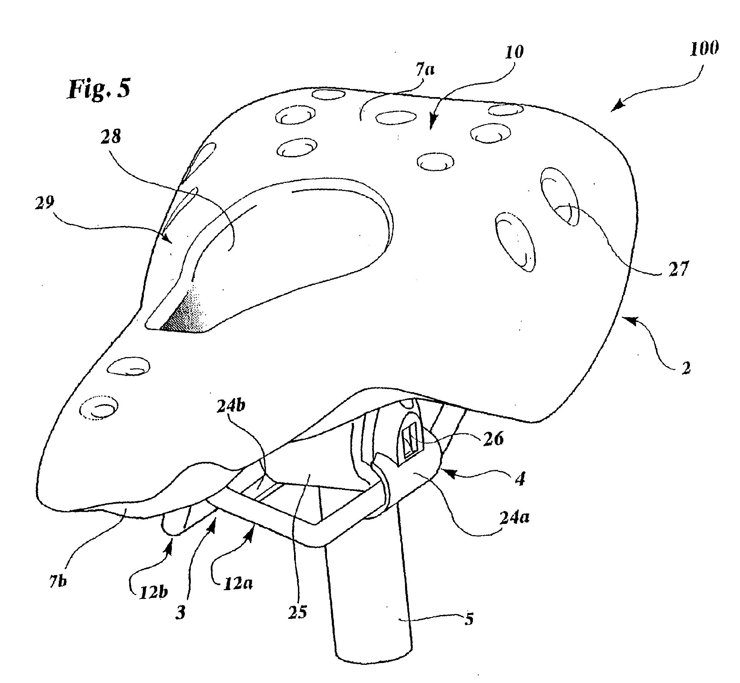

Figure 5 shows a second embodiment of the saddle according to the invention, generally indicated 100, in which details similar to those of the previous embodiment are indicated by the same reference numerals.

The saddle 100 differs from that of the previous embodiment in that it provides for a single large tie 28 extending between the walls 7a, 7b in a prostate support region, indicated 29 in Figure 5. This tie 28 also constitutes a pressure relief in the prostate support region in order to render the use of the saddle 100 by the user more comfortable by reducing pressure on the prostate region.

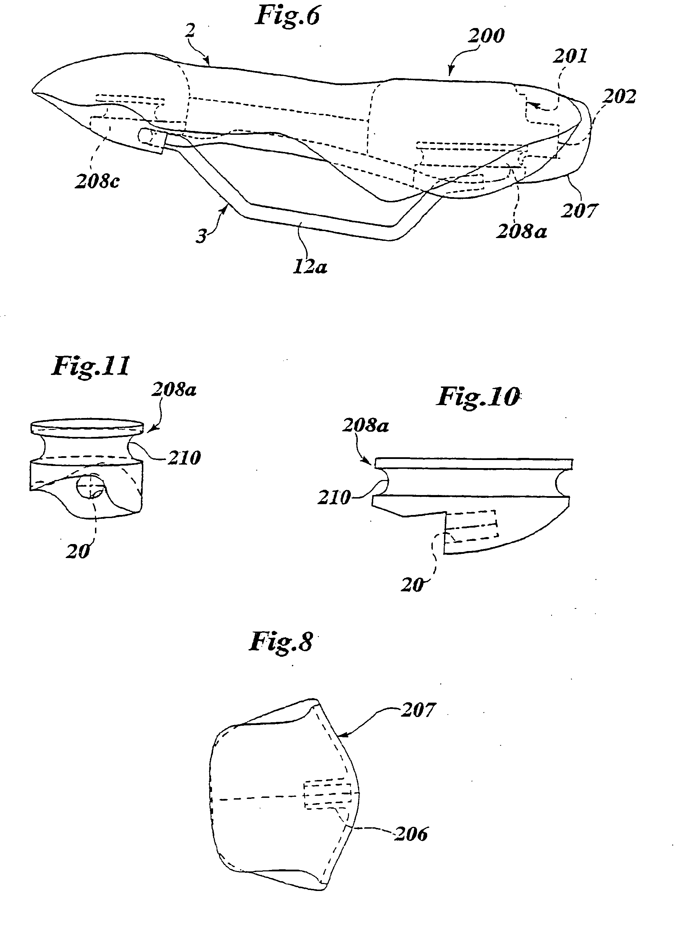

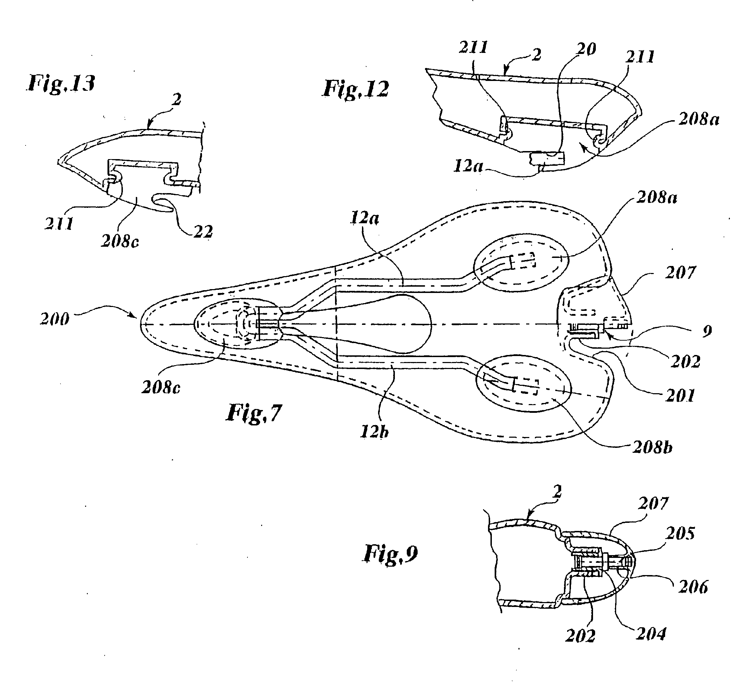

Figures 6 to 13 show a third embodiment of the invention, generally indicated 200. Details similar to those of the previous embodiments are distinguished by the same reference numerals. The saddle 200 differs from the previous embodiments in some details relating to the fixing of the framework 3 to the seat 2 and to the positioning of the inflation valve 9.

The valve 9 in this embodiment is positioned in a recess 201 formed in the rear region of the seat 2 and is housed in and screwed into a collar 202 with the interposition of a nipple 204. The rod portion 205 of the valve 9 is housed in a further collar 206 formed integrally with a plug 207 shaped so as to fill up the recess 201. The plug 207 is restrained releasably in the recess 201 by means of the rod 205.

The means for fixing the framework 3 to the seat 2 comprise blocks 208a, 208b, 208c snap-housed in respective seats 209a, 209b, 209c by the engagement of a groove 210 of each block on a corresponding annular projection 211 projecting inside each of the above-mentioned seats.

Each of the blocks 208a, 208b, 208c has a respective pocket-like recess 20, 21, 22; the recesses constitute seats for housing the ends 13, 14 of the rod-like arms 12a, 12b of the framework, as provided for in the previous embodiments.

In use, the saddle 1 (as well as the saddles 100 and 200) is inflated by the blowing of air through the valve means 9 until the desired degree of stiffness is reached. However, even a considerable change in the pressure inside the chamber 8 results in a minimal corresponding deformation of the walls 7a, 7b, by virtue of the presence of the ties 27, 28 the relative spacing of which remains substantially unaltered.

The saddle 1 with the preselected degree of inflation, is then fitted on the cycle frame. The tube 5 is inserted in the sleeve 25 to the desired level and the position of the saddle is adjusted by pivoting and translational movement of the framework 3 relative to the attachment device 4; when the preselected positioning has been achieved, the screw 26 is tightened, clamping the framework onto the tube.

The invention thus achieves the objects proposed, affording many advantages over known solutions.

In the first place, different degrees of stiffness can be achieved in the saddle without substantial alteration of its shape and do not therefore compromise its functional capacity and comfort in use.

Another advantage is that, since the saddle is produced by moulding of plastics material, it can be manufactured very quickly and has a low cost.

Yet another advantage is that the saddle structure of the invention enables improved comfort for the user to be achieved both by virtue of the provision of the ventilation ducts incorporated in the ties and by virtue of the provision of a pressure relief in the prostate area.

A further advantage is connected with the particularly pleasing visual impact due to the transparent material and to the different shapes which can easily be devised within the scope of the same inventive concept.

One of the main advantages is that the saddle is very light since it is constituted by a very thin shell of plastics material and is therefore particularly suitable for use on racing cycles.

## Claims

1. A pneumatic seat (2) produced in the form of a hollow shell (6) with opposed upper and lower walls (7a, 7b) jointly defining an inflatable chamber (8), said pneumatic seat (2) comprising at least one tie (27, 28) extending between the walls (7a, 7b) so as to limit the deformability of the walls (7a, 7b) with variations of the inflation pressure in the chamber (8), **characterized in that** said at least one tie is hollow axially so as to constitute a ventilation duct extending between the walls (7a, 7b).

2. A seat (2) according to Claim 1 in which the at least one tie (27, 28) is integral with the walls (7a, 7b) of the chamber (8).

3. A seat (2) according to Claim 1 or Claim 2, in which the chamber (8) and the at least one tie (27, 28) are produced by moulding of a plastics material by centrifuging.

4. A seat (2) according to one or more of the preceding claims in which the thickness of the walls (7a, 7b) is between 0.7 and 2 mm.

5. A seat (2) according to one or more of the preceding claims in which the thickness of the walls (7a, 7b) is between 0.8 and 1 mm.

6. A seat (2) according to one or more of the preceding claims in which valve means (9) are provided in the hollow shell (6) for adjusting the inflation pressure in the chamber (8).

7. A seat (2) according to Claim 6 in which the valve means (9) are fitted in a recess (201) formed in the hollow shell (6) and a plug (207) is provided and is restrained releasably in the recess (201) to re-establish the continuity of the hollow shell (6).

8. A seat (2) according to Claim 7 in which the plug (207) carries a collar (206) in which a portion of the rod (205) of the valve means (9) is releasably housed in order to restrain the plug (207), closing the recess (201).

9. A seat (2) according to one or more of the preceding claims which is made of plastics material and in which the plastics material is at least partially transparent.

10. A seat (2) according to one or more of the preceding claims in which the at least one tie (28) is located in a prostate support region (29) and constitutes a pressure relief thereof.

11. A seat (2) according to one or more of the preceding claims in which a plurality of the said ties (27, 28) is provided.

12. A pneumatic saddle (1, 100, 200) for cycles, vehicles and the like, comprising a seat (2) according to any one of the preceding claims, comprising a supporting framework (3) with a pair of rod-like arms (12a, 12b) which can be anchored to a frame of the cycle by means of an attachment device (4).

13. A saddle (1, 100, 200) according to Claim 12 in which the rod-like arms (12a, 12b) of the framework (3) are clamped to the attachment device (4) in an adjustable position relative to the frame.

14. A saddle (1, 100, 200) according to Claim 12 or Claim 13 in which the lower wall (7b) has recesses (20, 21, 22) constituting seats for housing respective ends (13, 14) for the anchorage of the supporting framework (3) to the seat (2).

15. A saddle (200) according to Claim 14 in which the recesses (20, 21, 22) are formed in blocks (208a, 208b, 208c) fitted in seats (209a, 209b, 209c) formed in the hollow shell (6).

16. A saddle (200) according to Claim 15 in which respective shaped coupling means and complementary shaped coupling means are provided in the seats (209a, 209b, 209c) and in the blocks (208a, 208b, 208c).

## Patentansprüche

1. Pneumatischer Sitz (2), der in Form einer hohlen Schale (6) mit einander gegenüberliegenden oberen und unteren Wänden (7a, 7b) hergestellt ist, die zusammen eine aufblasbare Kammer (8) bilden, wobei der pneumatische Sitz (2) mindestens eine Verbindung (27, 28) besitzt, die zwischen den Wänden (7a, 7b) verläuft, um die Verformbarkeit der Wände (7a, 7b) mit Veränderungen des Aufblasdrucks in der Kammer (8) zu begrenzen, **dadurch gekennzeichnet, dass** die mindestens eine Verbindung axial hohl ist, so dass sie einen Lüftungskanal bildet, der zwischen den Wänden (7a, 7b) verläuft.

2. Sitz (2) nach Anspruch 1, bei dem mindestens eine Verbindung (27, 28) in die Wände (7a, 7b) der Kammer (8) integriert ist.

3. Sitz (2) nach Anspruch 1 oder Anspruch 2, bei dem die Kammer (8) und die mindestens eine Verbindung (27, 28) durch Kunststoffpressen und durch Zentrifugieren hergestellt werden.

4. Sitz (2) nach einem oder mehreren der vorhergehenden Ansprüche, bei dem die Stärke der Wände (7a, 7b) zwischen 0,7 und 2 mm liegt.

5. Sitz (2) nach einem oder mehreren der vorhergehenden Ansprüche, bei dem die Stärke der Wände zwischen 0,8 und 1 mm liegt.

6. Sitz (2) nach einem oder mehreren der vorhergehenden Ansprüche, bei dem sich in der hohlen Schale (6) Ventilelemente (9) zum Verstellen des Aufblasdrucks in der Kammer (8) befinden.

7. Sitz (2) nach Anspruch 6, bei dem die Ventilelemente (9) in einer Aussparung (201) befestigt sind, die in der hohlen Schale (6) gebildet wird, und ein Stopfen (207) lösbar in der Aussparung (201) eingespannt ist, um die Kontinuität der hohlen Schale (6) wiederherzustellen.

8. Sitz (2) nach Anspruch 7, bei dem der Stopfen (207) einen Bund (206) trägt, in dem ein Teil der Ventilstange (205) lösbar untergebracht ist, um den Stopfen (207), der die Aussparung (201) verschließt, festzuhalten.

9. Sitz (2) nach einem oder mehreren der vorhergehenden Ansprüche, der aus Kunststoff hergestellt ist, wobei der Kunststoff zumindest teilweise transparent ist.

10. Sitz (2) nach einem oder mehreren der vorhergehenden Ansprüche, bei dem sich die mindestens eine Verbindung (28) in einem vorstehenden Abstützbereich (29) befindet und eine Druckentlastung für sie darstellt.

11. Sitz (2) nach einem oder mehreren der vorhergehenden Ansprüche, bei dem eine Vielzahl von Verbindungen (27, 28) vorhanden ist.

12. Pneumatischer Sattel (1, 100, 200) für Fahrräder, Kraftfahrzeuge und dergleichen, der einen Sitz (2) gemäß einem der vorhergehenden Ansprüche aufweist, welcher einen Stützrahmen (3) mit einem Paar stabähnlicher Arme (12a, 12b) besitzt, die mit Hilfe einer Befestigungsvorrichtung (4) an einem Rahmen des Fahrrades verankert werden können.

13. Sattel (1, 100, 200) nach Anspruch 12, bei dem die stabähnlichen Arme (12a, 12b) des Rahmens (3) in einer in Bezug auf den Rahmen verstellbaren Position an der Befestigungsvorrichtung (4) festgeklemmt werden.

14. Sattel (1, 100, 200) nach Anspruch 12 oder Anspruch 13, bei dem die untere Wand (7b) Aussparungen (20, 21, 22) besitzt, welche Aufnahmen für die jeweiligen Enden (13,14) der Verankerung des Stützrahmens (3) mit dem Sitz (2) darstellen.

15. Sattel (200) nach Anspruch 14, bei dem die Aussparungen (20, 21, 22) in Füllstücken bzw. Feldern (208a, 208b, 208c) gebildet werden, die sich in Aufnahmen (209a, 209b, 209c) befinden, welche in der hohlen Schale (6) gebildet werden.

16. Sattel (200) nach Anspruch 15, wobei in den Aufnahmen (209a, 209b, 209c) und in den Füllstücken bzw. Feldern (208a, 208b, 208c) jeweils geformte Kopplungselemente und zusätzliche geformte Kopplungselemente vorhanden sind.

## Revendications

1. Siège pneumatique (2) produit sous la forme d'une coque creuse (6) avec des parois supérieure et inférieure (7a, 7b) opposées définissant conjointement une chambre gonflable (8), ledit siège pneumatique (2) comprenant au moins un tirant (27, 28) s'étendant entre les parois (7a, 7b) afin de limiter la déformation des parois (7a, 7b) avec les variations de la pression de gonflage dans la chambre (8), **caractérisé en ce que** ledit au moins un tirant est creux de manière axiale afin de constituer un conduit de ventilation s'étendant entre les parois (7a, 7b).

2. Siège (2) selon la revendication 1, dans lequel le au moins un tirant (27, 28) est solidaire des parois (7a, 7b) de la chambre (8).

3. Siège (2) selon la revendication 1 ou la revendication 2, dans lequel la chambre (8) et le au moins un tirant (27, 28) sont produits en moulant une matière plastique par centrifugation.

4. Siège (2) selon l'une quelconque des revendications précédentes, dans lequel l'épaisseur des parois (7a, 7b) est comprise entre 0,7 et 2 mm.

5. Siège (2) selon une ou plusieurs des revendications précédentes, dans lequel l'épaisseur des parois (7a, 7b) est comprise entre 0,8 et 1 mm.

6. Siège (2) selon une ou plusieurs des revendications précédentes, dans lequel on prévoit des moyens de soupape (9) dans la coque creuse (6) pour régler la pression de gonflage dans la chambre (8).

7. Siège (2) selon la revendication 6, dans lequel les moyens de soupape (9) sont montés dans un enfoncement (201) formé dans la coque creuse (6) et un bouchon (207) est prévu et est retenu de manière amovible dans l'enfoncement (201) pour rétablir la continuité de la coque creuse (6).

8. Siège (2) selon la revendication 7, dans lequel le bouchon (207) supporte un collier (206) dans lequel une partie de la tige (205) des moyens de soupape (9) est logée de manière amovible afin de retenir le bouchon (207), bouchant l'enfoncement (201).

9. Siège (2) selon une ou plusieurs des revendications précédentes, qui est réalisé en matière plastique, et dans lequel la matière plastique est au moins partiellement transparente.

10. Siège (2) selon une ou plusieurs des revendications précédentes, dans lequel le au moins un tirant (28) est situé dans une région de support de prostate (29) et constitue son limiteur de pression.

11. Siège (2) selon une ou plusieurs des revendications précédentes, dans lequel on prévoit une pluralité desdits tirants (27, 28).

12. Selle pneumatique (1, 100, 200) pour cycles, véhicules et similaires, comprenant un siège (2) selon l'une quelconque des revendications précédentes, comprenant un châssis de support (3) avec une paire de bras en forme de tige (12a, 12b) qui peut être ancrée à un cadre du cycle au moyen d'un dispositif de fixation (4).

13. Selle (1, 100, 200) selon la revendication 12, dans laquelle les bras en forme de tige (12a, 12b) du châssis (3) sont bloqués sur le dispositif de fixation (4) dans une position réglable par rapport au cadre.

14. Selle (1, 100, 200) selon la revendication 12 ou la revendication 13 dans laquelle la paroi inférieure (7b) a des enfoncements (20, 21, 22) constituant des sièges pour loger les extrémités (13, 14) respectives pour l'ancrage du châssis de support (3) sur le siège (2).

15. Selle (200) selon la revendication 14, dans laquelle les enfoncements (20, 21, 22) sont formés en blocs (208a, 208b, 208c) montés dans les sièges (209a, 209b, 209c) formés dans la coque creuse (6).

16. Selle (200) selon la revendication 15, dans laquelle des moyens de couplage de forme respective et des moyens de couplage de forme complémentaire sont prévus dans les sièges (209a, 209b, 209c) et dans les blocs (208a, 208b, 208c).
